# EUROPÄISCHE PATENTSCHRIFT

(11) **EP 1 872 899 B1**
(45) Veröffentlichungstag und Bekanntmachung des Hinweises auf die Patenterteilung: **13.07.2011**
(21) Anmeldenummer: 07107534.5
(22) Anmeldetag: 04.05.2007
(51) Int. Cl.: B23Q 11/00

(54) **Staubauffangvorrichtung für eine Elektrohandwerkzeugmaschine**
Dust collection device for an handheld electrical tool
Dispositif d'absorption de la poussière pour une machine-outil électromanuelle

(30) Priorität: 28.06.2006 DE 102006029624
(43) Veröffentlichungstag der Anmeldung: 02.01.2008
(73) Patentinhaber: ROBERT BOSCH GMBH, 70442 Stuttgart (DE)
(72) Erfinder: Baumann, Otto, 70771, Leinfelden-Echterdingen (DE); Bernhardt, Thomas, 72631, Aichtal-Groetzingen (DE); Schmid, Hardy, 70563, Stuttgart (DE); Lennartz, Juergen, 73760, Ostfildern (DE); Bochert, Juergen, 70565, Stuttgart (DE)

(56) Entgegenhaltungen:
- EP-A- 1 661 661
- EP-A- 1 661 662
- EP-A1- 1 459 841
- EP-A2- 1 245 330
- WO-A-01/58642
- WO-A-2005/102598
- DE-A1- 4 335 417
- DE-A1- 10 346 207
- DE-A1-102004 021 292

## Beschreibung

### Stand der Technik

Die Erfindung betrifft eine Staubauffangvorrichtung für den mittels Luftstrom geförderten Bearbeitungsstaub einer Elektrohandwerkzeugmaschine, mit mindestens einem Staubfilter.

Solche Vorrichtung sind aus folgenden Dokumenten bekannt: DE 4335417A1, DE 10346207A1, WO 01/58642A1, EP 1661661A1, EP 1459841A1, DE 102004021292A1.

Staubauffangvorrichtungen für Elektrohandwerkzeugmaschinen sind bekannt. Der an der Bearbeitungsstelle anfallende Bearbeitungsstaub wird per Unterdruck mittels eines Luftstromes von der Bearbeitungsstelle weggefördert und einem Abscheidegefäß zugeführt. Im Abscheidegefäß befindet sich ein Staubfilter, um den Luftstrom zu reinigen. Die gereinigte Luft tritt aus einer Luftauslassöffnung der Staubauffangvorrichtung oder - wenn eine Saugeinrichtung in der Elektrohandwerkzeugmaschine untergebracht ist - aus letzterer aus.

Es ist bekannt, das mit Staubfilter versehene Abscheidegefäß im Bereich eines Staubabsaugauges nahe des Werkzeugs, beispielsweise des Bohrers der Elektrohandwerkzeugmaschine, unterzubringen. Nachteilig ist, dass das Volumen des Abscheidegefäßes aufgrund der im Arbeitsbereich liegenden Lage nur relativ klein gestaltet werden kann und daher eine häufige Gefäßentleerung notwendig wird.

Es ist ferner bekannt, das Abscheidegefäß maschinenseitig, also im Bereich des Hauptkörpers der Elektrohandwerkzeugmaschine unterzubringen. Nach Förderung eines bestimmten Bearbeitungsstaubvolumens setzt sich der Staubfilter mehr und mehr zu, sodass die Saugleistung abnimmt und eine Gefäßentleerung notwendig wird.

### Offenbarung der Erfindung

Aufgrund der Staubauffangvorrichtung gemäß Anspruch 1 ist es möglich, eine relativ große Menge an Bearbeitungsstaub im Abscheidegefäß mittels des Staubfilters abzuscheiden, ohne dass die Funktion des Staubfilters stark beeinträchtigt wird und ohne dass ein häufiges Entleeren des Abscheidegefäßes notwendig wird. Dadurch, dass der Staubfilter - in Gebrauchslage bei horizontalem Werkzeugbetrieb betrachtet -hängend befestigt und ihm - in Luftströmungsrichtung betrachtet -mindestens eine Staubsammelvorkammer vorgeordnet ist, wird sich der abgeschiedene Staub zunächst in der Staubsammelvorkammer sammeln und daher den Staubfilter nicht "überfluten". Erst wenn die Staubsammelvorkammer im Wesentlichen durch abgeschiedenen Bearbeitungsstaub, zu dem auch Materialbrocken usw. gehört, gefüllt ist, beginnt der Pegel weiter zu wachsen, sodass er die unteren Bereiche des hängend angeordneten Staubfilters erreicht und dann langsam an der "Schmutzseite" des Staubfilters ansteigt. Die freihängende Anordnung des Staubfilters, insbesondere der Falten des Staubfilters, sorgt im Zuge eines Befüllzyklus' lange dafür, dass der sich seitlich und/oder am Boden des Abscheidegefäßes ansammelnde Bearbeitungsstaub den Staubfilter noch nicht beaufschlagt, wodurch es in seinen Durchströmungseigenschaften kaum beeinflusst wird. Erst wenn große Oberflächenbereiche des Staubfilters durch den ansteigenden Staubpegel abgedeckt sind, kommt es zu einer Erhöhung des Druckverlustes und damit zu einer Verringerung der Saugleistung. Durch die hängende Anordnung des Staubfilters und den seitlich und/oder darunter liegenden Freiraum zur Aufnahme von abgeschiedenem Staub ist die Staubsammelvorkammer mit einem entsprechend großen Aufnahmevolumen geschaffen, sodass eine Entleerung des Abscheidegefäßes in nur relativ langen Zeitabständen notwendig wird. Selbstverständlich braucht jeder Staubfilter um sich herum einen gewissen Freiraum, um ihn in einer Aufnahme oder dergleichen einsetzen zu können. Der bekannte Freiraum dient auch dazu, eine entsprechende Anströmung des Staubfilters zu ermöglichen. Wenn nun gemäß der Erfindung von einer Staubsammelvorkammer geredet wird, so ist hierunter ein erfindungsgemäß derart "vergrößerter Freiraum" zu verstehen, der eine Vorkammerfunktion übernimmt, also ein sehr schnelles "Überfluten" des Filters mit abgeschiedenem Staub, Kleinteilen und dergleichen verhindert. Bezüglich der vorstehend erwähnten Gebrauchslage der Staubauffangvorrichtung, in der der Staubfilter hängend angeordnet ist, ist zu erwähnen, dass insbesondere hierunter die Hauptgebrauchslage einer Elektrohandwerkzeugmaschine zu verstehen ist, der die Staubauffangvorrichtung aufweist. Ist die Elektrohandwerkzeugmaschine beispielsweise als Schlagbohrmaschine ausgebildet oder als Bohrhammer, so ist unter der Gebrauchslage bei horizontalem Werkzeugbetrieb die Gebrauchslage zu verstehen, in der ein horizontaler, also ein im Wesentlichen waagerechter Bohrbetrieb oder Schlagbohrbetrieb oder Hammerbetrieb durchgeführt wird. Unabhängig von dieser Hauptgebrauchslage lässt sich die Handwerkzeugmaschine selbstverständlich im Zuge der Arbeiten in alle möglichen Raumrichtungen bewegen.

### Vorteilhafte Wirkungen

Es ist vorteilhaft, wenn der Staubfilter in einem Staubbehälter angeordnet ist. Dieser Staubbehälter wurde vorstehend als Abscheidegefäß bezeichnet, da er abgeschiedenen Bearbeitungsstaub und dergleichen aufnimmt.

Vorzugsweise ist vorgesehen, dass der Staubfilter vom Boden des Staubbehälters einen ersten Abstand zur Schaffung eines ersten Freiraumes aufweist, der der Staubsammelvorkammer angehört. Zusätzlich oder alternativ kann vorgesehen sein, dass mindestens eine Seitenwand des Staubbehälters seitlich zum Staubfilter einen zweiten Abstand zur Schaffung eines zweiten Freiraumes aufweist, der der Staubsammelvorkammer angehört. In jedem Fall oder auch zusammen wird demzufolge eine entsprechend große Staubsammelvorkammer ausgebildet, die - in Strömungsrichtung dem Staubfilter vorgelagert - ein großes Volumen vor dem Staubfilter schafft, sodass dieser erst bei einem relativ hohen Füllgrad mit dem steigenden Niveau des abgeschiedenen Staubes in Berührung kommt.

Eine Weiterbildung der Erfindung sieht vor, dass in den zweiten Freiraum ein Staubzuführkanal mündet. Der Staubzuführkanal liefert den von der Bearbeitungsstelle kommenden Staub an. Der über den Staubzuführkanal in den zweiten Freiraum eintretende Bearbeitungsstaub wird dort angesammelt. Dies gilt insbesondere für größere Partikel, die aufgrund ihres Gewichtes bereits in dem zweiten Freiraum liegen bleiben. Ist auch ein erster Freiraum vorgesehen, so wird auch dieser - insbesondere mit großen und weniger großen Partikeln gefüllt, bevor das Niveau derart weit ansteigt, dass der Staubfilter mit dem Spiegel des Abscheideguts in Berührung kommt.

Eine Weiterbildung der Erfindung sieht vor, dass der Staubzuführkanal mit seinem seitlich zum Staubfilter liegenden Austrittsendbereich beabstandet zum Boden des Staubbehälters liegt und in Richtung Boden des Staubbehälters weist. Ankommender Staub wird demzufolge in Richtung des Bodens des Staubbehälters geblasen und legt sich dort ab. Dies gilt insbesondere für größere Partikel des Staubes. Im Zuge dieser Anmeldung wird stets von Bearbeitungsstaub, Staub und so weiter geredet, auch wenn hierunter nicht nur Schwebeteile zu verstehen sind, sondern auch Bröckchen und schwerere Teile, die von dem Saugluftstrom zwar gefördert werden, jedoch aufgrund der Schwerkraft eher die Tendenz haben, in tiefergelegenen Zonen, wie dem ersten und/oder dem zweiten Freiraum liegen zu bleiben.

Eine Weiterbildung der Erfindung sieht vor, dass der Staubfilter in seinem Kopfbereich befestigt ist und im Übrigen freihängend angeordnet ist. Durch die freihängende Anordnung ist an fünf Seiten des Staubfilters jeweils eine Freizone geschaffen, die dazu führt, dass sich am Boden absetzender Staub nicht gleich den Staubfilter berührt.

Es ist vorteilhaft, wenn der Staubzuführkanal in eine Vertiefung des Staubbehälters hineinragt. Wird der Staubbehälter aus dem Gehäuse der Staubauffangvorrichtung zum Entleeren entnommen, was vorzugsweise durch ein Herausziehen nach unten erfolgt, so tritt der Austrittsendbereich des Staubzuführkanals aus der Vertiefung des Staubbehälters heraus. Staubreste, die sich dort möglicherweise abgelagert haben, fallen dennoch nicht heraus und verschmutzen den Umgebungsbereich nicht, weil derartige Staubreste in der Vertiefung liegen bleiben.

Vorteilhaft ist es, dass am Grunde der Vertiefung eine Dichtung für den eingesteckten Staubzuführkanal angeordnet ist. Diese Dichtung ist vorzugsweise selbstschließend ausgebildet, sodass beim Herausziehen des Staubzuführkanals ein selbstständiger Verschluss erfolgt. Hierdurch kann Staub, der sich im Staubbehälter befindet, nicht nach außen treten.

Die Dichtung ist bevorzugt als Lippendichtung ausgebildet, die bei Nichtbeaufschlagung mit dem Staubzuführkanal selbsttätig schließt und durch den Staubzuführkanal in Offenstellung gedrängt wird.

Bevorzugt ist vorgesehen, dass der Staubbehälter mindestens eine transparente Seitenwand oder einen transparenten Seitenwandbereich aufweist. Dementsprechend ist auch das Gehäuse derart gestaltet, dass die transparente Seitenwand beziehungsweise der transparente Seitenwandbereich von außen her einsichtig ist, sodass mit einem Blick erkannt werden kann, wie viel abgeschiedener Staub sich im Staubbehälter befindet.

Nach einer Weiterbildung der Erfindung ist vorgesehen, dass der Staubbehälter mindestens eine Seitenwand aufweist und dass die Seitenwand als zu öffnende Klappe ausgebildet ist. Durch einfaches Öffnen der Klappe kann daher eine Entleerung des Staubbehälters erfolgen. Vorteilhafterweise bildet die Klappe die transparente Seitenwand oder weist den transparenten Seitenwandbereich auf.

Der Staubfilter lässt sich einem Haltesitz des Staubbehälters vorzugsweise nach oben heraus entnehmen und auch von oben her einsetzen. Für einen Filterwechsel oder die Entnahme eines zu reinigenden Filters ist es daher lediglich erforderlich, den Staubbehälter aus dem Gehäuse der Staubauffangvorrichtung vorzugsweise nach unten hin herauszunehmen und dann den Staubfilter nach oben hin aus dem Haltesitz herauszuziehen.

Nach einer Weiterbildung der Erfindung ist vorgesehen, dass der Haltesitz eine Kupplungsstelle zum Anschluss an eine Saugöffnung der Elektrohandwerkmaschine bildet. Demzufolge übernimmt der Haltesitz ferner die Kupplungsfunktion, insbesondere spaltfreie Kupplungsfunktion, zur Elektrohandwerkzeugmaschine, die bevorzugt eine Saugeinrichtung aufweist. Demzufolge wird der Luftstrom durch die Kupplungsstelle hindurch bis zur Saugeinrichtung gesaugt und tritt von dort nach außen aus.

Eine Weiterbildung der Erfindung sieht vor, dass der Staubbehälter in ein Gehäuse einer an der Elektrohandwerkzeugmaschine lösbar befestigten Absaugvorrichtung einsetzbar, insbesondere einschiebbar, ist. Dabei ist es vorteilhaft, wenn der Staubbehälter von unten her in das Gehäuse einsetzbar, insbesondere einschiebbar, ist. Hierauf wurde vorstehend bereits schon mehrfach eingegangen.

### Kurze Beschreibung der Zeichnungen

Die Zeichnungen veranschaulichen die Erfindung anhand eines Ausführungsbeispiels und zwar zeigt:
- Figur 1: eine perspektivische Ansicht einer Staubauffangvorrichtung, die einer Elektrohandwerkzeugmaschine zugeordnet ist.
- Figur 2: eine Schnittansicht durch die Anordnung der Figur 1 und
- Figur 3: ein Staubbehälter der Staubauffangvorrichtung in perspektivischer und geöffneter Darstellung.

### Ausführungsform(en) der Erfindung

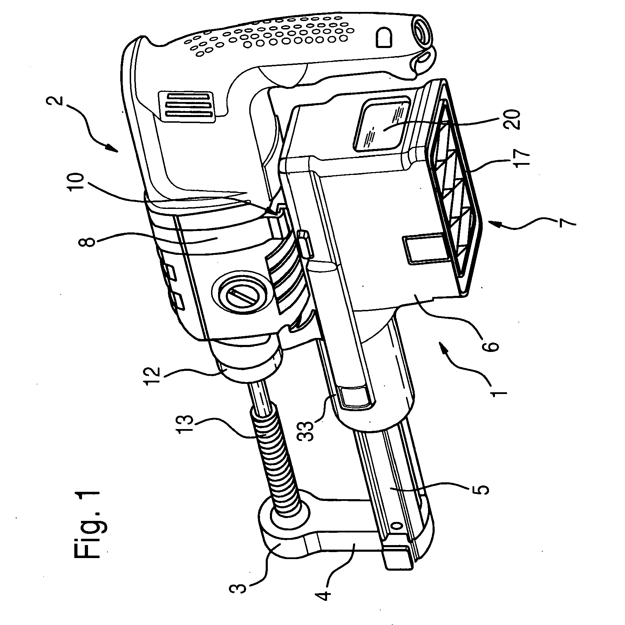

Die Figur 1 zeigt eine Staubauffangvorrichtung 1, die lösbar rastbar mit einer Elektrohandwerkzeugmaschine 2 verbunden ist. Bei der Elektrohandwerkzeugmaschine handelt es sich um eine Schlagbohrmaschine. Anstelle der Schlagbohrmaschine kann unter anderem auch eine gewöhnliche Bohrmaschine Verwendung finden oder ein Bohrhammer.

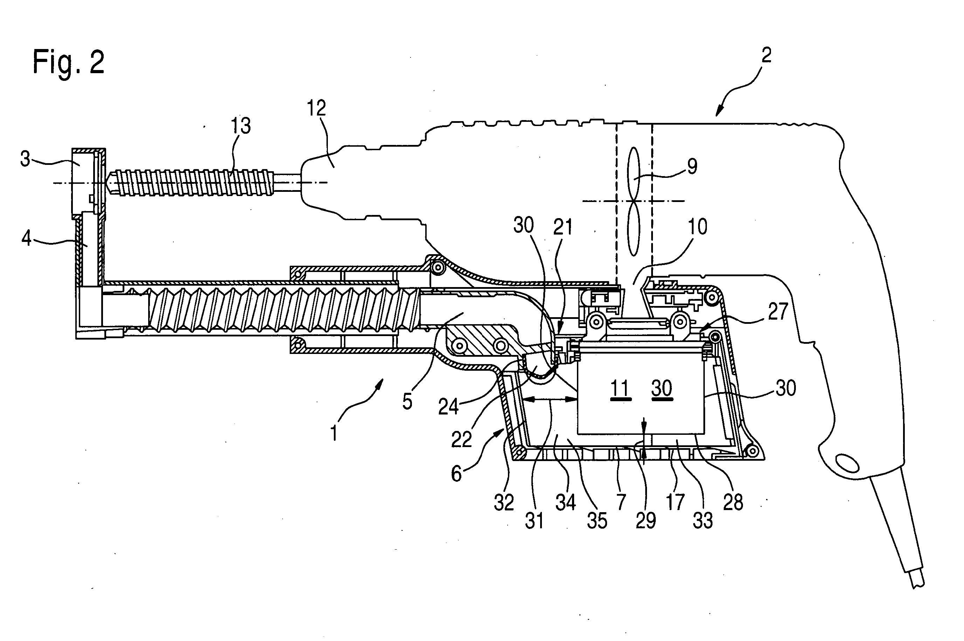

Die Staubauffangvorrichtung 1 weist ein Staubabsaugauge 3 auf, das über einen Saugkanal 4 und einen teleskopierbaren Saugkanal 5 mit einem Gehäuse 6 in Verbindung steht, das mittels geeigneter lösbarer Rastmittel an der Elektrohandwerkzeugmaschine 2 befestigbar ist. Im Gehäuse 6 befindet sich ein nach unten herausnehmbarer Staubbehälter 7. Die Elektrohandwerkzeugmaschine 2 weist ein Saugmodul 8 auf, dessen Sauglüfterrad 9 (Figur 2) von einem Antriebselektromotor der Elektrohandwerkzeugmaschine 2 mitangetrieben wird. Das Sauglüfterrad 9 steht über einem kaminartigen Saugkanal 10 mit dem Staubbehälter 7 über einen auswechselbaren Staubfilter 11 (Figur 2) in Verbindung.

Wie erkennbar, ist gemäß Figur 1 in eine Werkzeugaufnahme 12 der Elektrohandwerkzeugmaschine 2 ein Bohrer 13 angespannt. Wird dieser zur Bearbeitung eines Werkstücks, beispielsweise zum Bohren von Löchern in Beton, genutzt, so wird der anfallende Bearbeitungsstaub vom Staubabsaugauge 3 angesaugt. Der mit Staub belastete Luftstrom durchströmt die Saugkanäle 4 und 5 und gelangt in den Staubbehälter 7. Dort wird der Bearbeitungsstaub aufgrund des Staubfilters 11 abgeschieden und die gereinigte Saugluft steigt den Saugkanal 10 hinauf, durchsetzt das Sauglüfterrad 9 und wird seitlich aus entsprechenden Luftauslassöffnungen aus der Elektrohandwerkzeugmaschine 2 ausgestoßen.

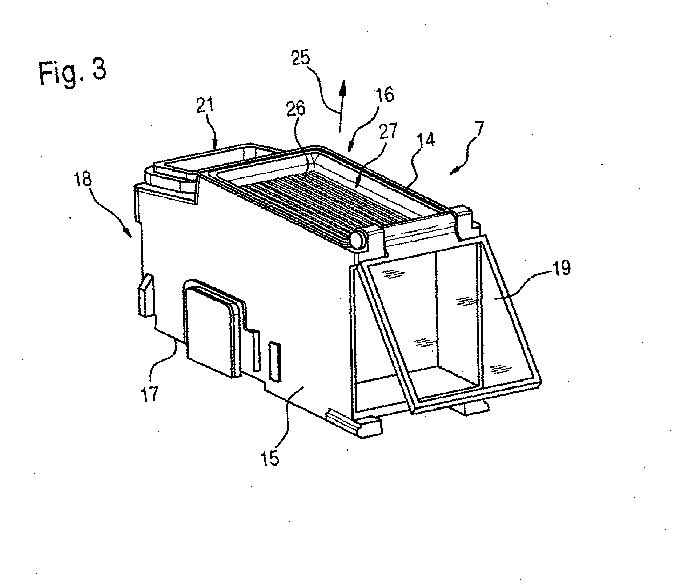

Gemäß der Figuren 2 und 3 befindet sich in dem Gehäuse 6 der Staubauffangvorrichtung 1 der Staubbehälter 7, der zwei parallel zueinander verlaufende Seitenwände 14, 15, einen Deckenbereich 16 sowie einen Boden 17 und zwei einander gegenüberliegende Seitenwände 18 und 19 aufweist. Die Seitenwand 19 ist aus transparenten Material hergestellt, sodass das Innere des Staubbehälters 7 einsichtig ist. Damit das Gehäuse 6 den Blick auf das Innere des Staubbehälters 7 nicht behindert, weist es ein Sichtdurchbruch 20 (Figur 1) auf. Die transparente Seitenwand 19 ist als Klappe ausgebildet, sodass sie durch Verschwenken einen Zugang in das Innere des Staubbehälters 7 gewährt, um diesen entleeren zu können, wenn sich eine entsprechende Bearbeitungsstaubmenge angesammelt hat. Die Anordnung ist derart getroffen, dass die Seitenwand 19 in Schließstellung gedrängt wird, sobald der Saugbehälter 7 in das Innere des Gehäuses 6 von unten her eingeschoben wird.

Der Staubbehälter 7 weist eine Vertiefung 21 auf, in die ein rohrförmiger Austrittsendbereich 22 des Saugkanals 5 unter Öffnen einer Dichtung 24, die insbesondere als Lippendichtung ist, hineinragt. Wird der Staubbehälter 7 nach unten aus dem Gehäuse 6 herausgezogen, so tritt der Austrittsendbereich 23 des Saugkanals 5 aus der Dichtung 24 sowie der Vertiefung 21 heraus, wobei die Dichtung 24 schließt, um möglichst kein Bearbeitungsstaub austreten zu lassen. Auch der Austrittsendbereich 22 selber besitzt eine sich dann schließende Dichtung, damit aus dem Saugkanal 5 kein Bearbeitungsmaterial austritt.

Der Staubfilter 11 ist als Taschenstaubfilter auswechselbar gestaltet, das heißt, er kann - gemäß Figur 3 - in Richtung des Pfeils 25 aus einem Haltesitz 27 des Staubbehälters 7 entnommen werden. Gemäß Figur 3 sind nach oben hin im Bereich des Haltesitzes 27 die Oberseiten 26 der Papierfalten des Taschenstaubfilters sichtbar.

Der Figur 1 ist deutlich entnehmbar, dass der Staubfilter 11 freihängend im Staubbehälter 7 derart angeordnet ist, dass seine Unterseite 28 einem ersten Abstand 29 zum Boden 17 des Staubbehälters 7 aufweist. Ferner weisen auch alle vier Seiten 30 des hängenden Staubfilters 11 Abstände zu den entsprechenden Wandungen des Staubbehälters 7 auf. Hierbei ist insbesondere zu erwähnen, dass die dem Austrittsendbereich 22 des Saugkanals 5 zugeordnete Seite 30 des Staubfilters 11 einen zweiten Abstand 31 zur zugeordneten Seitenwand 32 des Staubbehälters 7 aufweist. Auf diese Art und Weise wird zwischen der Unterseite 28 des Staubfilters 11 und dem Boden 17 ein erster Freiraum 33 und zwischen der Seite 30 des Staubfilters 11 und der Seitenwand 32 des Staubbehälters 7 ein zweiter Freiraum 34 ausgebildet. In diesen zweiten Freiraum 34 mündet von oben her der Austrittsendbereich 22 des Saugkanals 5. Dieses gebogene Ende ist auf den Boden 17 des Staubbehälters 7 gerichtet. Der zweite Freiraum 34 bildet eine Staubsammelvorkammer 35. Alternativ ist vorgesehen, dass die Staubsammelvorkammer 35 sowohl vom ersten Freiraum 33 als auch zweiten Freiraum 34 gebildet wird.

Aus dem Vorstehenden ergibt sich, dass vom Staubabsaugauge 3 abgesaugter und über die Saugkanäle 4 und 5 bis zum Austrittsendbereich 22 geförderter Bearbeitungsstaub beim Eintritt in den Staubbehälter 7 zunächst in die Staubsammelvorkammer 35 gelangt. Insbesondere tritt der Bearbeitungsstaub zunächst in den ersten Freiraum 33 ein. Hier sammeln sich insbesondere größere Partikel, die auch im Zuge des Ansteigens des Staubpegels innerhalb des Staubbehälters 7 in den zweiten Freiraum 34 eintreten und aufgrund der beiden Abstände 29 und 32 zunächst den Staubfilter 11 nicht beaufschlagen. Erst wenn sich in der Staubsammelvorkammer 35 eine relativ große Menge an Bearbeitungsstaub angesammelt hat, werden auch die Unterseite 28 und die Seiten 30 des Staubfilters 11 beziehungsweise entsprechende Zwischenräume zwischen den vorzugsweise als Taschen ausgebildeten Wandungen des Staubfilters 11 von dem untenliegenden, langsam im Pegel ansteigenden partikelartigen Bohrklein oder dergleichen beaufschlagt. Die Füllhöhe des abgeschiedenen Bearbeitungsstaubes kann durch den Sichtdurchbruch 20 des Gehäuses 6 und die transparente Seitenwand 19 von außen her beobachtet werden. Ist bei relativ hoch befülltem Staubbehälter 7 eine Entleerung notwendig, so wird dieser nach unten aus dem Gehäuse 6 durch Betätigung entsprechender Rasten entnommen und kann durch Öffnen der klappenartigen Seitenwand 19 entleert werden. Danach wird der Staubbehälter 7 wieder in das Gehäuse 6 eingeführt und dort verrastet.

## Patentansprüche

1. Staubauffangvorrichtung für den mittels Luftstrom geförderten Bearbeitungsstaub einer Elektrohandwerkzeugmaschine, mit mindestens einem Staubfilter, wobei Staubfilter (11) - in Gebrauchslage bei horizontalem Werkzeugbetrieb betrachtet - hängend befestigt ist und ihm - in Luftströmungsrichtung betrachtet - mindestens eine Staubsammelvorkammer (35) vorgeordnet ist **dadurch gekennzeichnet, dass** der Staubfilter (11) in einem Haltesitz (27) des Staubbehälters (7) von oben her einsetzbar und nach oben hin entnehmbar ist, und der Haltesitz (27) eine Kupplungsstelle zum Anschluss an eine Saugöffnung der Elektrohandwerkzeugmaschine (2) bildet.

2. Staubauffangvorrichtung nach Anspruch 1, **dadurch gekennzeichnet, dass** der Staubfilter (11) in einem Staubbehälter (7) angeordnet ist.

3. Staubauffangvorrichtung nach einem der vorhergehenden Ansprüche, **dadurch gekennzeichnet, dass** der Staubfilter (11) vom Boden (17) des Staubbehälters (7) einen ersten Abstand (29) zur Schaffung eines ersten Freiraums (33) aufweist, der der Staubsammelvorkammer (35) angehört.

4. Staubauffangvorrichtung nach einem der vorhergehenden Ansprüche, **dadurch gekennzeichnet, dass** mindestens eine Seitenwand (32) des Staubbehälters (7) zeitlich zum Staubfilter (11) einen zweiten Abstand (31) zur Schaffung eines zweiten Freiraums (34) aufweist, der der Staubsammelvorkammer (35) angehört.

5. Staubauffangvorrichtung nach einem der vorhergehenden Ansprüche, **dadurch gekennzeichnet, dass** in den zweiten Freiraum (34) ein Staubzuführkanal (5) mündet.

6. Staubauffangvorrichtung nach einem der vorhergehenden Ansprüche, **dadurch gekennzeichnet, dass** der Staubzuführkanal (5) mit seinem Austrittsendbereich (22) beabstandet zum Boden (17) des Staubbehälters (7) liegt und in Richtung auf den Boden (17) des Staubbehälters (7) weist.

7. Staubauffangvorrichtung nach einem der vorhergehenden Ansprüche, **dadurch gekennzeichnet, dass** der Staubfilter (11) in seinem Kopfbereich befestigt ist und im Übrigen freihängend angeordnet ist.

8. Staubauffangvorrichtung nach einem der vorhergehenden Ansprüche, **dadurch gekennzeichnet, dass** der Staubzuführkanal (5) in eine Vertiefung des Staubbehälters (7) hineinragt.

9. Staubauffangvorrichtung nach einem der vorhergehenden Ansprüche, **dadurch gekennzeichnet, dass** am Grunde der Vertiefung eine Dichtung (24) für den eingesteckten Staubzuführkanal (5) angeordnet ist.

10. Staubauffangvorrichtung nach einem der vorhergehenden Ansprüche, **dadurch gekennzeichnet, dass** die Dichtung (24) bei einem Herausziehen des Staubzuführkanals (5) selbst schließend ausgebildet ist.

11. Staubauffangvorrichtung nach einem der vorhergehenden Ansprüche, **dadurch gekennzeichnet, dass** die Dichtung (24) eine Lippendichtung ist.

12. Staubauffangvorrichtung nach einem der vorhergehenden Ansprüche, **dadurch gekennzeichnet, dass** der Staubbehälter (7) mindestens eine transparente Seitenwand (19) oder einen transparenten Seitenwandbereich aufweist.

13. Staubauffangvorrichtung nach einem der vorhergehenden Ansprüche, **dadurch gekennzeichnet, dass** der Staubbehälter (7) mindestens eine Seitenwand (19) aufweist und dass die Seitenwand (19) als zu öffnende Klappe ausgebildet ist.

14. Staubauffangvorrichtung nach einem der vorhergehenden Ansprüche, **dadurch gekennzeichnet, dass** der Staubbehälter (7) in ein Gehäuse (6) der an der Elektrohandwerkzeugmaschine (2) lösbar befestigbaren Staubauffangvorrichtung einsetzbar, insbesondere einschiebbar, ist.

15. Staubauffangvorrichtung nach einem der vorhergehenden Ansprüche, **dadurch gekennzeichnet, dass** der Staubbehälter (7) von unten her in das Gehäuse (6) einsetzbar, insbesondere einschiebbar, ist.

## Claims

1. Dust collection device for the processing dust, conveyed by means of air flow, of a portable electric power tool, comprising at least one dust filter, wherein the dust filter (11) - as viewed in the position of use during horizontal tool operation - is fastened in a suspended manner, and at least one dust collecting pre-chamber (35) is arranged upstream of said dust filter (11) - as viewed in the air flow direction, **characterized in that** the dust filter (11) can be inserted from above and can be removed upwards in a retaining seat (27) of the dust container (7), and the retaining seat (27) forms a coupling point for attaching to a suction opening of the portable electric power tool (2).

2. Dust collection device according to Claim 1, **characterized in that** the dust filter (11) is arranged in a dust container (7).

3. Dust collection device according to either of the preceding claims, **characterized in that** the dust filter (11) is at a first distance (29) from the bottom (17) of the dust container (7) for providing a first free space (33) which belongs to the dust collecting pre-chamber (35).

4. Dust collection device according to one of the preceding claims, **characterized in that** at least one side wall (32) of the dust container (7) is at a second lateral distance (31) from the dust filter (11) for providing a second free space (34) which belongs to the dust collecting pre-chamber (35).

5. Dust collection device according to one of the preceding claims, **characterized in that** a dust feed passage (5) opens into the second free space (34).

6. Dust collection device according to one of the preceding claims, **characterized in that** the dust feed passage (5), with its outlet end region (22), is at a distance from the bottom (17) of the dust container (7) and points in the direction of the bottom (17) of the dust container (7).

7. Dust collection device according to one of the preceding claims, **characterized in that** the dust filter (11) is fastened in its head region and is otherwise arranged in a freely suspended manner.

8. Dust collection device according to one of the preceding claims, **characterized in that** the dust feed passage (5) projects into a recess of the dust container (7).

9. Dust collection device according to one of the preceding claims, **characterized in that** a seal (24) for the inserted dust feed passage (5) is arranged at the base of the recess.

10. Dust collection device according to one of the preceding claims, **characterized in that** the seal (24) is designed to be self-closing when the dust feed passage (5) is pulled out.

11. Dust collection device according to one of the preceding claims, **characterized in that** the seal (24) is a lip seal.

12. Dust collection device according to one of the preceding claims, **characterized in that** the dust container (7) has at least one transparent side wall (19) or a transparent side wall region.

13. Dust collection device according to one of the preceding claims, **characterized in that** the dust container (7) has at least one side wall (19) and **in that** the side wall (19) is designed as a flap to be opened.

14. Dust collection device according to one of the preceding claims, **characterized in that** the dust container (7) can be inserted, in particular pushed, into a housing (6) of the dust collection device, which can be detachably fastened to the portable electric power tool (2).

15. Dust collection device according to one of the preceding claims, **characterized in that** the dust container (7) can be inserted, in particular pushed, into the housing (6) from below.

## Revendications

1. Dispositif d'absorption de la poussière pour la poussière d'usinage d'une machine-outil électromanuelle, transportée au moyen d'un flux d'air, comprenant au moins un filtre à poussière, le filtre à poussière (11) - vu dans la position d'utilisation lors du fonctionnement horizontal de l'outil - étant fixé en suspension et - vu dans la direction de l'écoulement d'air - étant disposé en aval d'au moins une préchambre de collecte de poussière (35),
**caractérisé en ce que** le filtre à poussière (11) peut être inséré par le haut dans un siège de retenue (27) du récipient de poussière (7) et en être retiré vers le haut, et **en ce que** le siège de retenue (27) forme un point d'accouplement pour le raccordement à une ouverture d'aspiration de la machine-outil électromanuelle (2).

2. Dispositif d'absorption de la poussière selon la revendication 1, **caractérisé en ce que** le filtre à poussière (11) est disposé dans un récipient de poussière (7).

3. Dispositif d'absorption de la poussière selon l'une quelconque des revendications précédentes, **caractérisé en ce que** le filtre à poussière (11) présente un premier espacement (29) depuis le fond (17) du récipient de poussière (7), pour former un premier espace libre (33) qui appartient à la préchambre de collecte de poussière (35).

4. Dispositif d'absorption de la poussière selon l'une quelconque des revendications précédentes, **caractérisé en ce qu'**au moins une paroi latérale (32) du récipient de poussière (7) présente, latéralement au filtre à poussière (11), un deuxième espacement (31) pour former un deuxième espace libre (34) qui appartient à la préchambre de collecte de poussière (35).

5. Dispositif d'absorption de la poussière selon l'une quelconque des revendications précédentes, **caractérisé en ce que**, dans le deuxième espace libre (34), débouche un canal d'alimentation en poussière (5).

6. Dispositif d'absorption de la poussière selon l'une quelconque des revendications précédentes, **caractérisé en ce que** le canal d'alimentation en poussière (5) se situe avec sa région d'extrémité de sortie (22) à une certaine distance du fond (17)du récipient de poussière (7) et est tourné dans la direction du fond (17) du récipient de poussière (7).

7. Dispositif d'absorption de la poussière selon l'une quelconque des revendications précédentes, **caractérisé en ce que** le filtre à poussière (11) est fixé dans sa partie de tête et le reste est disposé en porte-à-faux.

8. Dispositif d'absorption de la poussière selon l'une quelconque des revendications précédentes, **caractérisé en ce que** le canal d'alimentation en poussière (5) pénètre dans un renfoncement du récipient de poussière (7).

9. Dispositif d'absorption de la poussière selon l'une quelconque des revendications précédentes, **caractérisé en ce qu'**un joint d'étanchéité (24) pour le canal d'alimentation en poussière enfiché (5) est disposé à la base du renfoncement.

10. Dispositif d'absorption de la poussière selon l'une quelconque des revendications précédentes, **caractérisé en ce que** le joint d'étanchéité (24) est réalisé de manière auto-fermante dans le cas d'un retrait du canal d'alimentation en poussière (5).

11. Dispositif d'absorption de la poussière selon l'une quelconque des revendications précédentes, **caractérisé en ce que** le joint d'étanchéité (24) est un joint d'étanchéité à lèvre.

12. Dispositif d'absorption de la poussière selon l'une quelconque des revendications précédentes, **caractérisé en ce que** le récipient de poussière (7) présente au moins une paroi latérale transparente (19) ou une région de paroi latérale transparente.

13. Dispositif d'absorption de la poussière selon l'une quelconque des revendications précédentes, **caractérisé en ce que** le récipient de poussière (7) présente au moins une paroi latérale (19) et **en ce que** la paroi latérale (19) est réalisée sous forme de clapet à ouvrir.

14. Dispositif d'absorption de la poussière selon l'une quelconque des revendications précédentes, **caractérisé en ce que** le récipient de poussière (7) peut être inséré dans un boîtier (6) du dispositif d'absorption de la poussière pouvant être fixé de manière amovible à la machine-outil électromanuelle (2), notamment par enfoncement.

15. Dispositif d'absorption de la poussière selon l'une quelconque des revendications précédentes, **caractérisé en ce que** le récipient de poussière (7) peut être inséré par le bas dans le boîtier (6), notamment par enfoncement.
